# EUROPÄISCHE PATENTSCHRIFT

(11) **EP 1 629 257 B1**
(45) Veröffentlichungstag und Bekanntmachung des Hinweises auf die Patenterteilung: **12.11.2008**
(21) Anmeldenummer: 04728798.2
(22) Anmeldetag: 22.04.2004
(51) Int. Cl.: G01F 23/24, G01F 23/26

(54) **VERFAHREN UND SCHALTUNGSANORDNUNG ZUR DETEKTION EINES FÜLLSTANDS EINER FLÜSSIGKEIT**
METHOD AND CIRCUIT ARRANGEMENT FOR DETECTING THE LEVEL OF A LIQUID
PROCEDE ET MONTAGE POUR DETECTER UN NIVEAU DE REMPLISSAGE DE LIQUIDE

(30) Priorität: 31.05.2003 DE 10324731
(43) Veröffentlichungstag der Anmeldung: 01.03.2006
(73) Patentinhaber: Braun GmbH, 61476 Kronberg (DE)
(72) Erfinder: FRANKE, Michael, 64291 Darmstadt (DE); WOHLRABE, Frank, 65779 Kelkheim (DE)
(86) Internationale Anmeldenummer: PCT/EP2004/004240
(87) Internationale Veröffentlichungsnummer: WO 2004/106866

(56) Entgegenhaltungen:
- WO-A-00/43735
- US-A- 4 853 718
- US-B1- 6 362 632
- US-B1- 6 457 335

## Beschreibung

Die Erfindung betrifft ein Verfahren und eine Schaltungsanordnung zur Detektion eines Füllstands einer Flüssigkeit in einem Behälter.

Aus der US 5,775,164 ist eine Einrichtung zur Detektion eines Flüssigkeitspegels in einem Behälter bekannt, die zwei im Behälter angebrachte Elektroden und eine elektronische Schaltung aufweist, die mit den Elektroden verbunden ist. Damit die Flüssigkeit nicht durch Meßspannungen elektrolysiert wird, wird nur während kurzer Meßphasen eine Wechselspannung zwischen den Elektroden erzeugt, und der elektrische Widerstand zwischen den Elektroden gemessen. Aus der WO 00/43735 ist ein Verfahren zur kapazitiven Messung des Füllstands einer elektrisch nicht leitfähigen Flüssigkeit in einem Behälter bekannt.

Es ist Aufgabe der vorliegenden Erfindung ein einfaches Verfahren und eine einfache Schaltungsanordnung zur Detektion eines Füllstands einer elektrisch leitfähigen Flüssigkeit in einem Behälter mit einer Füllstands-Meßelektrode und einer zweiten Elektrode anzugeben.

Die Lösung der gestellten Aufgabe gelingt mit einem Verfahren, bei dem zur Detektion eines Füllstands einer Flüssigkeit in einem Behälter in einem ersten Schritt an einen Kondensator, dessen erstes Ende mit der Füllstands-Meßelektrode und dessen zweites Ende mit der zweiten Elektrode verbunden ist, für eine erste Zeitspanne eine bestimmte Spannung angelegt wird, danach in einem zweiten Schritt eine zweite Zeitspanne abgewartet, und danach in einem dritten Schritt die Spannung am Kondensator detektiert oder gemessen wird.
Eine zur Durchführung des erfindungsgemäßen Verfahrens geeignete Schaltungsanordnung kann leicht mittels einer Meßschaltung realisiert werden, die für die Füllstandsmessung, abgesehen von einem Masseanschluß, nur einen Anschluß benötigt, weil die einzelnen Verfahrensschritte nacheinander ausgeführt werden. Dies stellt insbesondere dann einen großen Vorteil dar, wenn eine solche Meßschaltung in einen Mikrokontroller oder einen anwendungsspezifischen integrierten Schaltkreis (ASIC) implementiert werden soll, da die Anzahl der Anschlüsse bei einem Mikrokontroller oder ASIC preiswesentlich ist. Allerdings muß dieser Anschluß abwechselnd als Ausgang und als Eingang verwendet werden können.

Das erfindungsgemäße Verfahren hat außerdem den Vorteil, daß die Flüssigkeit, deren Füllstand gemessen werden soll, durch die Füllstandsmessung praktisch nicht elektrolysiert wird, da die zur Messung verwendete Meßspannung aus einem hinreichend kurzen Spannungsimpuls bestehen kann.

Um einen Füllstand in einem Behälter fortlaufend zu überwachen, muß die Füllstandsmessung natürlich von Zeit zu Zeit wiederholt werden. Beim erfindungsgemäßen Verfahren wird ein aus dem ersten, zweiten und dritten Schritt bestehender Meßzyklus erst dann wiederholt, wenn nach dem dritten Schritt eine bestimmte Zeitspanne vergangen ist. Vorzugsweise wird nach dem dritten Schritt in einem vierten Schritt die Füllstands-Meßelektrode für eine vierte Zeitspanne mit einem bestimmten Potential, beispielsweise Massepotential, verbunden. Auf diese Weise wird verhindert, daß sich die Flüssigkeit im Laufe der Zeit auflädt, und die Füllstandsmessung unzuverlässig werden kann.

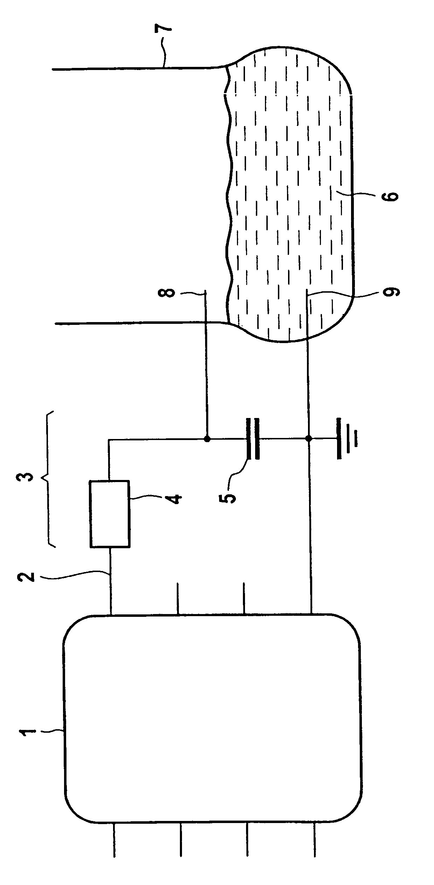

Die Erfindung wird nachstehend anhand eines Ausführungsbeispiels für eine erfindungsgemäße Schaltungsanordnung zur Detektion eines Füllstands einer Flüssigkeit in einem Behälter erläutert, die in der einzigen Figur dargestellt ist.

Die in der Figur dargestellte Schaltungsanordnung enthält eine Meßschaltung 1, die in einem Mikrokontroller realisiert ist, und ein Integrierglied 3, das einen Widerstand 4 und einen Kondensator 5 aufweist. Der Mikrokontroller besitzt eine Mehrzahl von Anschlüssen, von denen jedoch, abgesehen von einem Masseanschluß, nur einer für die Meßschaltung vorgesehen ist. Dieser Anschluß 2 ist umschaltbar, d.h. kann abwechselnd als Ausgang und als Eingang verwendet werden. An diesen Anschluß 2 ist das Integrierglied 3 angeschlossen, d.h. das eine Ende des Widerstands 4 ist mit diesem Anschluß 2 verbunden, und das andere Ende des Widerstands 4 ist mit einer Füllstands-Meßelektrode 8 eines Flüssigkeitsbehälters 7 und über einen Kondensator 5 mit Masse verbunden. Der Behälter 7 weist noch eine zweite Elektrode 9 auf, die unterhalb der Füllstands-Meßelektrode 8 angeordnet und mit Masse verbunden ist.

Nachfolgend wird der Meßablauf beschrieben. Im ersten Schritt gibt die Meßschaltung 1 an ihrem als Ausgang geschalteten Anschluß 2 einen kurzen Spannungsimpuls ab, der so bemessen ist, daß der Kondensator 5 des Integrierglieds 3 fast ganz aufgeladen werden kann. Parallel zum Kondensator 5 liegen die beiden Elektroden 8, 9 des Behälters 7, die ebenfalls einen Kondensator darstellen, dessen Kapazität jedoch davon abhängt, ob nur die Füllstands-Meßelektrode 8 oder beide Elektroden 8, 9 in die Flüssigkeit 6 eintauchen. Im darauffolgenden zweiten Schritt wird während einer zweiten kurzen Zeitspanne der Anschluß 2 der Meßschaltung 1 umgeschaltet, und stellt danach einen hochohmigen Eingang der Meßschaltung 1 dar. Der Kondensator 5 des Integrierglieds 3 kann sich daher, abgesehen von zu vernachlässigenden Leckströmen, nicht entladen, wenn nur die zweite 9 oder keine Elektrode in die Flüssigkeit 6 eintaucht. Daher wird er in diesem Fall eine Spannung halten, die fast der Amplitude des Spannungsimpulses entspricht, der ihm während des ersten Schritts zugeführt wurde. Tauchen jedoch beide Elektroden 8, 9 in die Flüssigkeit ein, wird der Kondensator 5 des Integrierglieds 3 während des ersten Schritts nur auf eine vergleichsweise geringe Spannung aufgeladen, da ihm ja dann die Kapazität der Flüssigkeit 6 parallelgeschaltet ist. Außerdem kann er sich während des zweiten Schritts über die Flüssigkeit 6 entladen. Im darauffolgenden dritten Schritt detektiert oder mißt die Meßschaltung 1 während einer dritten Zeitspanne die Spannung am Kondensator 5 des Integrierglieds 3.

Vorzugsweise ist die Länge der ersten und zweiten Zeitspanne und die Dimensionierung des Integrierglieds 3 so gewählt, daß die Meßschaltung 1 lediglich entweder einen HIGH-Pegel oder einen LOW-Pegel detektieren muß, d.h im dritten Schritt wird die Spannung nicht genau gemessen, sondern wird lediglich vom Mikrokontroller abgefragt. Insbesondere muß dann der Widerstand 4 des Integrierglieds 3 viel größer und die Kapazität des Kondensators 5 des Integrierglieds 3 viel kleiner sein als der Widerstand bzw. die Kapazität der Flüssigkeit 6 zwischen den beiden Elektroden 8, 9. Der aus dem ersten, zweiten und dritten Schritt bestehende Meßzyklus wird vorzugsweise erst dann wiederholt, wenn nach dem dritten Schritt eine vierte Zeitspanne vergangen ist, die viel größer ist als die zweite und dritte Zeitspanne.

## Patentansprüche

1. Verfahren zur Detektion eines Füllstands einer Flüssigkeit in einem Behälter, der eine Füllstands-Meßelektrode und eine zweite Elektrode aufweist,
**dadurch gekennzeichnet,**
**daß** in einem ersten Schritt an einen Kondensator (5), dessen erstes Ende mit der Füllstands-Meßelektrode (8) und dessen zweites Ende mit der zweiten Elektrode (9) verbunden ist, für eine erste Zeitspanne eine bestimmte Spannung angelegt wird, daß danach in einem zweiten Schritt eine zweite Zeitspanne abgewartet wird, und daß danach in einem dritten Schritt die Spannung am Kondensator (5) detektiert oder gemessen wird.

2. Verfahren nach Anspruch 1,
**dadurch gekennzeichnet,**
**daß** ein aus dem ersten, zweiten und dritten Schritt bestehender Meßzyklus erst dann wiederholt wird, wenn nach dem dritten Schritt eine bestimmte Zeitspanne vergangen ist.

3. Verfahren nach Anspruch 1 oder 2,
**dadurch gekennzeichnet,**
**daß** nach dem dritten Schritt in einem vierten Schritt die Füllstands-Meßelektrode (8) für eine vierte Zeitspanne mit einem bestimmten Potential, vorzugsweise Massepotential, verbunden wird.

4. Schaltungsanordnung zur Detektion eines Füllstands einer Flüssigkeit in einem Behälter, der eine Füllstands-Meßelektrode und eine zweite Elektrode aufweist,
**dadurch gekennzeichnet,**
**daß** sie einen Kondensator (5), dessen erstes Ende mit der Füllstands-Meßelektrode (8) und dessen zweites Ende mit der zweiten Elektrode (9) verbunden ist, und eine Meßschaltung (1) mit einem Anschluß (2) aufweist, der über einen Widerstand (4) mit der Füllstands-Meßelektrode (8) verbindbar ist.

5. Schaltungsanordnung nach Anspruch 4,
**dadurch gekennzeichnet,**
**daß** der Anschluß (2) der Meßschaltung (1) sowohl als Ausgang als auch als Eingang verwendbar ist.

6. Schaltungsanordnung nach Anspruch 5,
**dadurch gekennzeichnet,**
**daß** die Meßschaltung (1) an ihrem Anschluß (2) einen Spannungsimpuls ausgeben kann und auch eine am Anschluß (2) anliegende Meßspannung auswerten kann.

7. Schaltungsanordnung nach einem der Ansprüche 4 bis 6,
**dadurch gekennzeichnet,**
**daß** die Meßschaltung (1) in einem Mikrokontroller implementiert ist.

## Claims

1. A method for detecting the level of a liquid in a container that is provided with a level measuring electrode and a second electrode,
**characterized in**
**that** a certain voltage is applied to a capacitor (5) for a first period in a first step, which capacitor has a first end being coupled to the level measuring electrode (8) and a second end being coupled to the second electrode (9), wherein the subsequent second step comprises waiting for a second period and the ensuing third step comprises the detection or measurement of the voltage at the capacitor (5).

2. The method according to Claim 1,
**characterized in**
**that** a measuring cycle comprising the first, second and third steps is not repeated until a certain period has elapsed after the third step.

3. The method according to Claim 1 or 2,
**characterized in**
**that**, after the third step, the level measuring electrode (8) is preferably connected to a certain potential, for example, the ground potential, for a fourth period in a fourth step.

4. A circuit arrangement for detecting the level of a liquid in a container that is provided with a liquid measuring electrode and a second electrode,
**characterized in**
**that** the circuit arrangement comprises a capacitor (5), which capacitor has a first end coupled to the level measuring electrode (8) and a second end coupled to the second electrode (9), and a measuring circuit (1) with a terminal (2) that can be connected to the level measuring electrode (8) by means of a resistor (4).

5. The circuit arrangement according to Claim 4,
**characterized in**
**that** the terminal (2) of the measuring circuit (1) can be used as an output as well as an input.

6. The circuit arrangement according to Claim 5,
**characterized in**
**that** the measuring circuit (1) is able to deliver a voltage pulse at its terminal (2) and to evaluate a measuring voltage applied to the terminal (2).

7. The circuit arrangement according to one of Claims 4-6,
**characterized in**
**that** the measuring circuit (1) is implemented in a microcontroller.

## Revendications

1. Procédé de détection d'un état de remplissage d'un liquide dans un récipient, qui présente une électrode de mesure de l'état de remplissage et une deuxième électrode,
**caractérisé en ce que**
dans une première étape, une tension déterminée est appliquée à un condensateur (5), dont la première extrémité est reliée à l'électrode de mesure d'état de remplissage (8) et dont la deuxième extrémité est reliée à la deuxième électrode (9), pendant une première plage de temps, **en ce que** ensuite dans une deuxième étape une attente a lieu pendant une deuxième plage de temps et **en ce que** ensuite dans une troisième étape, la tension est détectée ou mesurée sur la condensateur (5).

2. Procédé selon la revendication 1,
**caractérisé en ce que** le cycle de mesure constitué de la première, deuxième et troisième étape est alors répété seulement quand une plage de temps déterminée s'est écoulée après la troisième étape.

3. Procédé selon la revendication 1 ou 2,
**caractérisé en ce que** après la troisième tape, l'électrode de mesure de l'état de remplissage (8) est reliée à un potentiel déterminé dans une quatrième étape pendant une quatrième plage de temps, de préférence à un potentiel de masse.

4. Ensemble de circuits pour la détection d'un état de remplissage d'un liquide dans un récipient, qui présente une électrode de mesure de l'état de remplissage et une deuxième électrode,
**caractérisé en ce que**
il présente un condensateur (5), dont la première extrémité est reliée à l'électrode de mesure de l'état de remplissage (8) et dont la deuxième extrémité est reliée à la deuxième électrode (9), et un circuit de mesure (1) comportant un raccord (2), qui peut être relié via une résistance (4) à l'électrode de mesure de l'état de remplissage (8).

5. Ensemble de circuits selon la revendication 4,
**caractérisé en ce que**
le raccord (2) du circuit de mesure (1) peut être utilisé tant comme sortie que comme entrée.

6. Ensemble de circuits selon la revendication 5,
**caractérisé en ce que**
le circuit de mesure (1) peut délivrer une impulsion de tension au niveau de son raccord (2) et peut aussi évaluer une tension de mesure présente au niveau du raccord (2).

7. Ensemble de circuits selon une des revendications 4 à 6,
**caractérisé en ce que**
le circuit de mesure (1) est implémenté dans un microcontrôleur.
